**Europäisches Patentamt**

**European Patent Office**

**Office européen des brevets**

(19)

(11) Numéro de publication : **0 022 709**
**B1**

# (12) FASCICULE DE BREVET EUROPÉEN

(45) Date de publication du fascicule du brevet :
28.12.83

(21) Numéro de dépôt : **80401025.4**

(22) Date de dépôt : **07.07.80**

(51) Int. Cl.³ : **H 01 B 11/18, G 01 T 3/00**

---

(54) **Câble électrique conducteur insensible aux rayonnements nucléaires.**

---

(30) Priorité : 12.07.79 FR 7918123

(43) Date de publication de la demande :
**21.01.81 Bulletin 81/03**

(45) Mention de la délivrance du brevet :
**28.12.83 Bulletin 83/52**

(84) Etats contractants désignés :
**DE GB IT SE**

(56) Documents cités :
**FR-A- 1 590 198**
**CANADIAN JOURNAL OF PHYSICS, vol. 53, no. 3,**
**1975 Ottawa CA G.F. LYNCH: "Ionic and Gamma-Ray**
**Induced Photoconductivity of MgO pages 210-218**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Petitcolas, Hubert**
**9, Hameau du Château**
**F-38360 Sassenage (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Câble électrique conducteur insensible aux rayonnements nucléaires

La présente invention concerne un câble électrique conducteur, insensible aux rayonnements nucléaires. Cette invention s'applique notamment dans les réacteurs nucléaires, à la mesure en continu de diverses grandeurs physiques telles que le flux de neutrons thermiques ou rapides, l'intensité du rayonnement γ, des déformations, etc. Généralement, ces mesures sont effectuées à l'aide de sondes qui délivrent un signal électrique qui doit être transporté de la sonde parfois immergée dans le cœur du réacteur, jusqu'à un appareil de mesure situé dans une salle de contrôle extérieure. Les câbles conducteurs qui sont utilisés sont souvent perturbés par des courants ou des tensions parasites, en particulier dans la partie de ces câbles qui est intérieure au cœur du réacteur ou très proche de celui-ci, sous l'influence des rayonnements émis par le combustible : neutrons et β de désactivation, rayonnements γ et électrons émis au moment de la capture des rayonnements γ. Ces perturbations peuvent être importantes notamment si la longueur irradiée du câble est relativement grande ou si la sonde a une faible sensibilité vis-à-vis de celle du câble. Il résulte de ces perturbations qu'il est pratiquement impossible d'effectuer certaines mesures telles que par exemple, la mesure en continu du flux de neutrons rapides. Ces signaux parasites résultant des perturbations, rendent également le détecteur inutile pendant une certaine durée, lorsqu'il s'agit d'effectuer des mesures de phénomènes transitoires rapides dont la connaissance est essentielle pour améliorer la sécurité des réacteurs rapides. Ces courants et tensions parasites obligent souvent à utiliser des détecteurs de très grand volume si l'on veut mesurer instantanément le flux de neutrons thermiques.

Diverses solutions ont été envisagées pour remédier à cette trop forte sensibilité des câbles de transmission de signaux entre les sondes de mesure et les appareils de mesure.

L'une de ces solutions consiste, pour obtenir un signal utile très supérieur au bruit engendré dans le câble, à augmenter la sensibilité du détecteur en augmentant ses dimensions. Cette solution n'est cependant pas toujours envisageable, notamment lorsqu'il est impossible de disposer de la place nécessaire pour loger ce détecteur encombrant qui d'autre part, perturbe le champ de rayonnement à mesurer. De plus, cette solution qui ne s'attaque pas à la cause des perturbations ne permet pas de mettre au point des détecteurs présentant une faible sensibilité relative, par exemple pour la mesure des flux de neutrons rapides.

Une autre solution consiste à utiliser un câble conducteur blindé bifilaire. Les deux conducteurs intérieurs sont censés véhiculer le même courant parasite ; l'un des deux conducteurs est relié au détecteur alors que l'autre, qui est conducteur de compensation, ne l'est pas. En soustrayant le signal du conducteur de compensation, du signal produit par le détecteur et son conducteur de liaison, il est possible de s'affranchir en partie du signal parasite produit dans le câble. Cette solution n'est pas parfaite. En effet, il est plus difficile et plus coûteux de mesurer deux signaux et d'en extraire la différence, que de ne faire qu'une seule mesure. De plus, on sait qu'une grandeur obtenue par différence de deux grandeurs voisines est facilement affectée d'une erreur relative très importante ; enfin, il est très difficile, voire même impossible, de fabriquer un câble bifilaire symétrique et il en résulte que les deux conducteurs ne délivrent jamais le même signal parasite et que les utilisateurs s'orientent généralement vers l'utilisation de deux câbles blindés monofilaires plutôt que vers l'utilisation d'un câble bifilaire.

Dans la solution qui utilise deux câbles blindés monofilaires, l'un sert à la mesure et l'autre à la compensation. Cette solution a pour principal inconvénient de doubler le nombre de fils de mesure, ce qui a pour résultat de doubler l'encombrement, le nombre des passages étanches, etc. et donc d'accroître le coût de telles mesures. Cette solution exige de plus que les deux câbles suivent le même chemin, de manière à être situés dans les mêmes champs de rayonnement. Cette contrainte ne peut pas toujours être respectée, il en résulte alors la production de signaux parasites différents dans chacun des câbles monofilaires. Enfin, comme pour le câble bifilaire, il est nécessaire d'effectuer des mesures par différence, qui entraînent une erreur relative très élevée.

Des câbles connus et qui présentent les inconvénients mentionnés plus haut sont décrits dans le brevet FR-A-1 590 198 et dans la revue « Canadian Journal of Physics » — 53 (1975)-3 — pages 210-218.

La présente invention a pour but de remédier à ces inconvénients et notamment de réaliser un câble électrique conducteur insensible aux rayonnements nucléaires, qui ne nécessite pas, comme dans les solutions envisagées précédemment, d'utiliser une structure bifilaire ou des détecteurs de dimensions importantes. Ce but est atteint grâce au câble conducteur de l'invention, qui présente une structure le rendant très peu sensible aux rayonnements nucléaires, et notamment aux neutrons, aux rayonnements γ, aux électrons extérieurs.

L'invention a pour objet un câble électrique conducteur, insensible aux rayonnements nucléaires, comprenant au moins une âme conductrice, au moins une couche d'une substance isolante entourant cette âme conductrice et au moins une gaine conductrice entourant cette couche isolante, caractérisé en ce que le diamètre $\phi_D$ de la gaine, le diamètre $\phi_B$ de l'âme conductrice, le diamètre $\phi_C$ de la couche isolante, sont liés par la relation :

$$\frac{\phi_B^2}{\phi_D^2 - \phi_C^2} = \frac{F_2}{F_1} \cdot \frac{1}{360} \, 2 \arcsin \frac{2\,\phi_B}{\phi_D + \phi_C}$$

$F_1$ représentant la fraction de rayonnements $\beta^-$ qui sont issus de l'âme sous l'action des rayonnements nucléaires et qui atteignent la gaine, $F_2 \cdot (1/360) \cdot 2$ arc sin $(2\phi_B/\phi_D + \phi_C)$ représentant la fraction des rayonnements $\beta^-$ issus de la gaine sous l'action des rayonnements nucléaires et qui atteignent l'âme, la substance isolante étant constituée par un mélange de deux oxydes métalliques choisis dans la liste suivante : MgO, $Al_2O_3$, BeO, SrO, NbO, $ZrO_2$, la gaine et l'âme étant en acier inoxydable à faible teneur en manganèse.

Selon une autre caractéristique, une couche de surgainage en zirconium est interposée entre l'âme et la couche isolante.

D'autres caractéristiques et avantages de l'invention ressortiront mieux de la description qui va suivre, donnée à titre purement illustratif, en référence aux dessins annexés dans lesquels :

la figure 1 représente en coupe transversale, un câble conforme à l'invention ;

la figure 2, deux couches de matériaux différents soumis à des rayonnements et dans lesquelles circulent des courants résultants ; et

la figure 3 représente schématiquement les courants qui circulent dans l'âme, la couche isolante et la gaine du câble de la figure 1, lorsqu'il est soumis à des rayonnements.

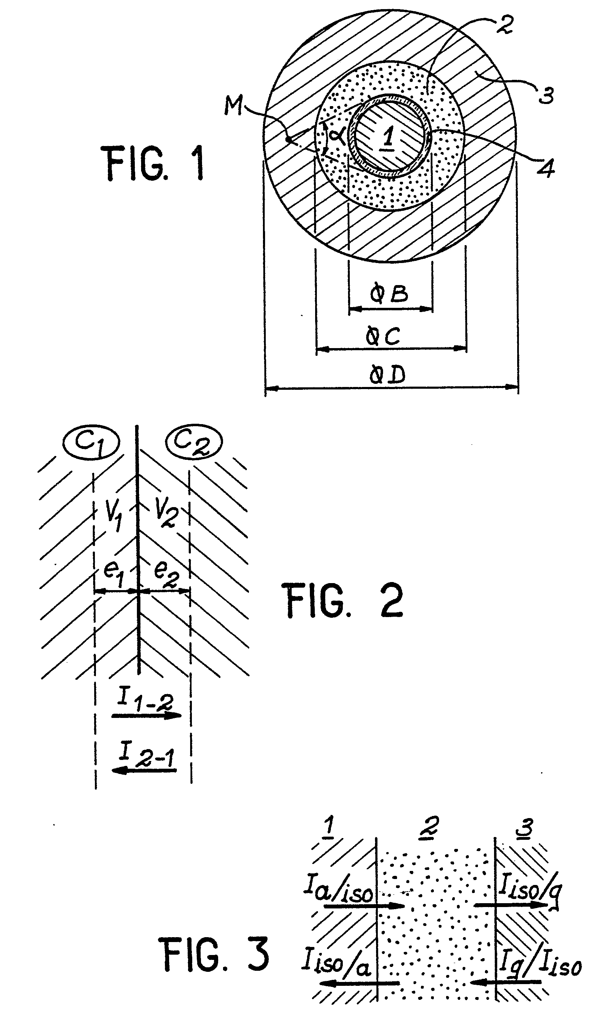

En référence à la figure 1, on a représenté un câble coaxial conforme à l'invention qui comprend au moins une âme conductrice 1, au moins une couche 2 d'une substance isolante entourant cette âme conductrice, et au moins une gaine conductrice 3 entourant cette couche isolante. Afin de diminuer la sensibilité du câble aux rayonnements nucléaires, comme on le verra par la suite, il est possible d'introduire une couche de surgainage 4, de type métallique, entre l'âme conductrice 1 et la couche isolante 2.

Si l'on désigne par $\phi_B$, $\phi_C$, $\phi_D$ les diamètres respectifs de l'âme conductrice 1, de la couche isolante 2 et de la gaine 3, pour que le câble ainsi constitué soit insensible aux rayonnements nucléaires, il est nécessaire, comme on le verra par la suite, que la relation :

$$\frac{\phi_B^2}{\phi_D^2 - \phi_C^2} = \frac{F_2}{F_1} \cdot \frac{1}{360} \cdot 2 \text{ arc sin} \frac{2\,\phi_B}{\phi_D + \phi_C}.$$

soit respectée.

Dans cette relation, $F_1$ représente la fraction des rayonnements $\beta^-$ qui sont issus de l'âme 1 et qui atteignent la gaine 3, correspondant à la transmission des milieux traversés avant d'arriver à la gaine (notamment, comme on le verra plus loin en détail, la substance isolante qui constitue la couche 2 et qui est formée par un mélange d'au moins deux oxydes métalliques) ; par contre, la fraction des $\beta^-$ issus de la gaine 3 et qui atteignent l'âme 1 est à peu près égale à $F_2 \cdot (\alpha/360)$, $F_2$ étant également la transmission des milieux traversés avant d'arriver à l'âme, et $\alpha$ l'angle moyen sous lequel on voit l'âme conductrice 1 à partir d'un point M situé à mi-épaisseur de la gaine 3. Pour que les rayonnements $\beta^-$ qui vont de l'âme vers la gaine et de la gaine vers l'âme s'équilibrent, il faut que les volumes sources Va et Vg qui émettent ces rayonnements à partir de l'âme ou à partir de la gaine, obéissent à la relation :

$$\frac{Va}{Vg} = \frac{F_2}{F_1} \cdot \frac{\alpha}{360}.$$

Si l'on désigne $\alpha$ en fonction du diamètre de l'âme et du diamètre moyen de la gaine, il en résulte que :

$$\text{Sin } \frac{\alpha}{2} = \frac{\phi_B}{\dfrac{\phi_D + \phi_C}{2}}$$

d'où l'on tire :

$$\alpha = 2 \text{ arc sin} \frac{2\,\phi_B}{\phi_D + \phi_C}.$$

Il est également possible d'exprimer le volume source Va, en fonction du diamètre de l'âme et de la longueur considérée h de cette âme soumise aux rayonnements et d'exprimer aussi le volume source Vg de la gaine, en fonction du diamètre externe $\phi_D$ et du diamètre interne $\phi_C$ de cette gaine, et de la longueur considérée h de celle-ci, le long du câble :

$$Va = \frac{\pi}{4} \cdot \phi_B^2 \cdot h; \qquad Vg = \frac{\pi}{4} (\phi_D^2 - \phi_C^2) \cdot h.$$

Il en résulte que :

$$Va = \frac{\phi_B^2}{\phi_D^2 - \phi_C^2} = \frac{F_2}{F_1} \cdot \frac{\alpha}{360}$$

3

d'où l'on tire :

$$\frac{\phi_B^2}{\phi_D^2 - \phi_C^2} = \frac{F_2}{F_1} \cdot \frac{1}{360} \cdot 2 \, arc \sin \frac{2 \, \phi_B}{\phi_D + \phi_C} .$$

Les dimensions de l'âme, de la couche isolante et de la gaine, doivent obéir à cette relation pour qu'il y ait compensation des rayonnements $\beta^-$ allant de l'âme vers la gaine et de la gaine vers l'âme. Ces dimensions procurent aussi une diminution de la sensibilité du câble aux neutrons. Le surgainage intérieur constitué par la gaine métallique 4, qui entoure l'âme conductrice 1, permet de diminuer la sensibilité du câble aux rayonnements $\gamma$ de basse énergie.

La géométrie du câble, comme indiqué plus haut, est très importante pour que celui-ci soit insensible aux rayonnements nucléaires. On va maintenant montrer, en référence à la figure 2, que la nature des matériaux utilisés est elle aussi importante pour réduire cette sensibilité, notamment aux rayonnements $\gamma$. La figure 2 représente deux couches $C_1$, $C_2$, de matériaux différents, soumises par exemples à un rayonnement $\gamma$. On sait que les électrons secondaires qui participent à la formation des courants parasites, sous l'influence des rayonnements $\gamma$, présentent des énergies inférieures ou égales à celles de ces rayonnements, et présentent donc de faibles parcours dans la matière. Puisque le parcours des électrons est faible, sous l'influence des rayonnements $\gamma$, seule une mince couche du matériau $C_1$ peut envoyer des électrons dans le matériau $C_2$ créant ainsi un courant $I_{1-2}$ et inversement pour le matériau $C_2$ qui envoie des électrons dans le matériau $C_1$, en créant un courant $I_{2-1}$.

Le courant $I_{1-2}$ envoyé du matériau $C_1$ vers le matériau $C_2$ est proportionnel au volume $V_1$ du corps $C_1$ à partir duquel des électrons peuvent être émis vers le matériau $C_2$ ; ce volume $V_1$ s'exprime par la relation :

$$V_1 = S_{1-2} \cdot e_1 .$$

Dans cette relation :

$S_{1-2}$ est la surface du matériau $C_1$ en regard du matériau $C_2$ ;

$e_1$ est l'épaisseur du matériau $C_1$ que peuvent traverser les électrons ; cette épaisseur est proportionnelle au parcours $R_{(E)}$ des électrons d'énergie E et inversement proportionnelle au rapport $Z/A$ du matériau $C_1$, ainsi qu'à la densité $\rho 1$ du matériau $C_1$ ; Z désigne le nombre atomique du matériau considéré, tandis que A désigne sa masse atomique. On peut alors écrire :

$$I_{1-2} = K_1 \, R_{(E)} \cdot S_{1-2} \cdot \frac{1}{\rho 1} \left( \frac{A}{Z} \right).$$

Cette relation est applicable au cas des électrons monoénergétiques d'énergie E.

Le courant $I_{1-2}$ est également proportionnel à la probabilité $\mu$ d'événements photoélectriques et Compton, dans ce volume $V_1$. Il est donc possible d'écrire :

$$\mu = \frac{\mu(E)}{\rho} \rho 1 .$$

Dans cette relation, $\mu(E)/\rho$ est le coefficient d'absorption en cm²/g, qui varie beaucoup avec la nature des matériaux et l'énergie des rayonnements $\gamma$. Il est alors possible d'écrire :

$$I_{1-2} = K_1 \cdot R_{(E)} \cdot S_{1-2} \left( \frac{\mu(E)}{\rho} \right) \cdot \frac{A}{Z} .$$

Enfin, le courant $I_{1-2}$ envoyé du matériau $C_1$ vers le matériau $C_2$, est proportionnel au flux $\psi_{(E)}$ des rayonnements $\gamma$ d'énergie E.

En référence à la figure 3, on a représenté schématiquement la superposition de l'âme conductrice 1, de l'isolant 2 et de la gaine 3. Sur cette figure, on a représenté par des flèches le courant $I_a$/iso qui circule de l'âme vers l'isolant, le courant $I_{iso}$/a qui circule de l'isolant vers l'âme, le courant $I_{iso}$/g qui circule de l'isolant vers la gaine, et le courant $I_g$/iso qui circule de la gaine vers l'isolant.

Il est alors possible d'écrire à un coefficient de proportionnalité $K_2$ près, que le bilan total des courants circulant dans le câble par suite de l'influence sur ce câble des rayonnements $\beta$ est égal à :

$$I = K_2 (I_a/iso - I_{iso}/a + I_{iso}/g - I_g/iso) ,$$

ou encore :

$$I = K_{(E)} \, \psi_{(E)} \, R_{(E)} \left[ \left( \phi_A \frac{\mu(E)}{\rho} \cdot \frac{A}{Z} \right)_a - \left( \phi_A \frac{\mu(E)}{\rho} \cdot \frac{A}{Z} \right)_{iso} + \left( \phi_g \frac{\mu(E)}{\rho} \cdot \frac{A}{Z} \right)_{iso} - \left( \phi_g \frac{\mu(E)}{\rho} \cdot \frac{A}{Z} \right)_g \right]$$

**0 022 709**

Dans cette expression, $\phi_A$ désigne le diamètre extérieur de l'âme, tandis que $\phi_g$ désigne le diamètre intérieur de la gaine. Le premier terme contenu dans la parenthèse est relatif au matériau qui constitue l'âme, les deuxième et troisièmes termes sont relatifs aux matériaux qui constituent l'isolant, tandis que le quatrième terme est relatif au matériau qui constitue la gaine.

Si l'on pose :

$$\phi_A\left(\frac{\mu(E)}{\rho}\cdot\frac{A}{Z}\right)_a - \left(\phi_A\,\frac{\mu(E)}{\rho}\cdot\frac{A}{Z}\right)_{iso} + \left(\phi_g\,\frac{\mu(E)}{\rho}\cdot\frac{A}{Z}\right)_{iso} - \left(\phi_g\,\frac{\mu(E)}{\rho}\cdot\frac{A}{Z}\right)_g$$

= H(E, Zi, $\phi$i), il est possible d'écrire :

$$I = \int_0^\infty K_{(E)}\,\psi_{(E)}\,R_{(E)}[H_{(E)},\,Zi,\,\phi i]\,dE\,.$$

Pour réduire la sensibilité du conducteur aux rayonnements $\gamma$, cette expression doit présenter une valeur aussi proche que possible de zéro.

Pour minimiser cette expression, il est possible de minimiser le terme H(E, Zi, $\phi$i), en utilisant des matériaux présentant un faible numéro atomique. Il est également nécessaire que les matériaux qui constituent l'âme, l'isolant et la gaine, présentent des numéros atomiques aussi voisins que possible, afin de diminuer la sensibilité différentielle résiduelle.

Un matériau intéressant qui peut constituer la gaine ainsi que l'âme conductrice (qui doivent être solides, ductiles et résistantes aux températures élevées), est l'acier inoxydable dont tous les constituants ont un numéro atomique inférieur à 40 pour l'isolant, il est intéressant que celui-ci soit composé de deux oxydes métalliques choisis dans une liste qui comporte MgO, $Al_2O_3$, BeO, SrO, NbO, $ZrO_2$. Cependant, il est à remarquer que dans un câble coaxial, la surface intérieure de la gaine est nécessairement plus grande que la surface extérieure de l'âme. En conséquence, il y a plus d'électrons qui vont de la gaine vers l'âme, que dans l'autre sens. Cette sensibilité négative doit être supprimée, et à cet effet, il est possible de choisir entre plusieurs solutions : l'une d'elles consiste à surgainer l'âme conductrice par une couche d'un matériau à numéro atomique élevé présentant une faible sensibilité aux neutrons ; cette couche peut être du zirconium (couche 4 — figure 1). Le matériau de ce surgainage a aussi pour avantage de présenter une grande section de capture des rayonnements $\gamma$. Enfin, il est également possible, par un mélange bien dosé entre deux des isolants mentionnés plus haut et qui présentent respectivement des numéros atomiques respectivement plus faibles et plus forts que celui de l'âme et de la gaine (qui sont en acier inoxydable par exemple), de diminuer cette sensibilité résiduelle du câble aux rayonnements $\gamma$. Cette dernière solution tend à annuler l'expression H(E, Zi, $\phi$i) mentionnée plus haut.

Comme on l'a déjà indiqué, les oxydes métalliques les plus utilisés pour la réalisation de la couche isolante sont MgO, $Al_2O_3$, BeO, SrO, NbO, $ZrO_2$. Ces oxydes permettent de réduire la sensibilité aux neutrons thermiques car ils présentent de faibles sections efficaces $\sigma_c$ et $\sigma_{act}$, de capture et d'activation. Cette particularité est intéressante, car les particules $\gamma$ de capture neutroniques, produisent des déplacements d'électrons de l'âme vers la gaine ou inversement, par effet photoélectrique ou par effet Compton. Le même phénomène se produit aussi avec les particules $\beta^-$ de désactivation. Ces déplacements d'électrons ou de particules $\beta^-$ constituent des parasites instantanés et il en résulte que l'utilisation de matériaux présentant des sections efficaces faibles, est une condition importante.

La magnésie MgO présente comme sections efficaces : $\sigma_c$ = 57 mb (millibarns) et $\sigma_{act}$ = 3 mb. L'alumine ($Al_2O_3$) peut être également employée et présente comme section efficace $\sigma_{act}$ = 235 mb ; elle a pour avantage de présenter une très importante résistivité électrique à haute température. La silice ($SiO_2$) présente pour section efficace $\sigma_c$ = 91 mb et $\sigma_{act}$ = 3,4 mb. L'oxyde de strontium (SrO) présente pour section efficace $\sigma_c$ = 140 mb et $\sigma_{act}$ = 5 mb ; enfin, on peut également utiliser la zircone ($ZrO_2$) ou l'oxyde de niobium (NbO) et également la glucine ou oxyde de béryllium (BeO), qui présente pour section efficace $\sigma_c = \sigma_{act}$ = 9 mb, qui sont négligeables ; l'oxyde de béryllium est donc très intéressant pour sa faible sensibilité aux neutrons.

Parmi les matériaux qui peuvent constituer l'âme conductrice et la gaine, on a cité l'acier inoxydable. A titre d'exemple, un acier inoxydable qui contiendrait 70 % de fer, 18 % de chrome, 10 % de nickel et 1 à 2 % de manganèse aurait pour section efficace $\sigma_c$ = 3,14 b (barns) et $\sigma_{éct}$ = 205 mb. Avec un acier comportant au moins de 0,1 % de manganèse, on aurait par contre : $\sigma_c$ = 2,88 b et $\sigma_{act}$ = 5,74 mb. Il est donc particulièrement intéressant d'utiliser pour l'âme conductrice et pour la gaine, un acier inoxydable spécialement appauvri en manganèse.

Le câble électrique conducteur, à faible sensibilité aux rayonnements nucléaires, qui vient d'être décrit, permet d'améliorer les mesures de physique nucléaire effectuées avec des détecteurs. Il permet également de s'affranchir de l'usage des câbles compensés bifilaires, associés à un coûteux appareil de mesures différentielles ; de plus, il permet d'effectuer des mesures dans des réacteurs nucléaires de puissance, avec un faible rapport signal (du détecteur) sur bruit (du câble), et de diminuer le temps mort, notamment dans les mesures de phénomènes transitoires.

On a réalisé, en exemple, un câble conforme à l'invention dont l'isolant est constitué d'un mélange de deux corps de numéros atomiques respectivement inférieur et supérieur à celui de la gaine.

Le conducteur intérieur est en acier inoxydable et contient le minimum de manganèse (ex. 0,09 %).

5

L'isolant est par exemple constitué de la manière suivante :

MgO 50 % en masse,

SrO 50 % en masse (ou ZrO$_2$...).

Cet isolant présente un diamètre intérieur de 0,375 mm et un diamètre extérieur de 0,7 mm.

La gaine extérieure est en acier inoxydable, identique à celui du conducteur intérieur et présente un diamètre intérieur de 0,7 mm et un diamètre extérieur de 1,2 mm.

Les dimensions citées en exemple peuvent subir un ajustement relatif (ex. de l'ordre de 20 %) et des variations absolues importantes (ex. jusqu'à un facteur 4).

Les pourcentages peuvent être ajustés (ex. ± 30 %).

## Revendications

1. Câble électrique conducteur, insensible aux rayonnements nucléaires, comprenant au moins une âme conductrice (1), au moins une couche (2) d'une substance isolante entourant cette âme conductrice et au moins une gaine conductrice (3) entourant cette couche isolante, caractérisé en ce que le diamètre $\phi_D$ de la gaine (3), le diamètre $\phi_B$ de l'âme conductrice (1), le diamètre $\phi_C$ de la couche isolante (2), sont liés par la relation :

$$\frac{\phi_B^2}{\phi_D^2 - \phi_C^2} = \frac{F_2}{F_1} \cdot \frac{1}{360} \cdot 2 \arcsin \frac{2\,\phi_B}{\phi_D + \phi_C},$$

$F_1$ représentant la fraction de rayonnements $\beta^-$ qui sont issus de l'âme sous l'action des rayonnements nucléaires et qui atteignent la gaine ; $F_2 \cdot (1/360) \cdot 2 \arcsin (2\phi_B/\phi_D + \phi_C)$ représentant la fraction de rayonnements $\beta^-$ issus de la gaine sous l'action des rayonnements nucléaires et qui atteignent l'âme, la substance isolante étant constituée par un mélange de deux oxydes métalliques choisis dans la liste suivante : MgO, Al$_2$O$_3$, BeO, SrO, NbO, ZrO$_2$, la gaine (3) et l'âme (1) étant en acier inoxydable à faible teneur en manganèse.

2. Câble selon la revendication 1, caractérisé en ce qu'une couche (4) de surgainage en zirconium est interposée entre l'âme (1) et la couche isolante (2).

## Claims

1. Electrically-conductive cable resistant to nuclear radiation comprising at least one conductive core (1) at least one layer (2) of insulating material surrounding said conductive core, and at least one conductive sheath (3) surrounding said insulating layer, characterized in that the diameter $\phi_D$ of the sheath (3) the diameter $\phi_B$ of the conductive core (1), and the diameter $\phi_C$ of the insulating layer related according to the equation :

$$\frac{\phi_B^2}{\phi_D^2 - \phi_C^2} = \frac{F_2}{F_1} \frac{1}{360} \cdot 2 \arcsin \frac{2\,\phi_B}{\phi_D + \phi_C}$$

wherein $F_1$ is the fraction of $\beta^-$ rays emitted by the core under the influence of nuclear radiation and which reach the sheath ; and $F_2 \cdot (1/360) \cdot 2 \arcsin (2\phi_B/\phi_D + \phi_C)$ is a fraction of $\beta^-$ rays emitted by the sheath under the influence of nuclear radiation and which reach the core ; the insulating material being selected from the group comprising : MgO, Al$_2$O$_3$, BeO, SrO, NbO, and ZrO$_2$, the sheath (3) and the core (1) being formed from stainless steel of low manganese content.

2. Cable according to claim 1, characterized in that an additional sheathing layer (4) of zirconium is interposed between the core (1) and the insulating layer (2).

## Ansprüche

1. Elektrisches, gegen Kernstrahlung unempfindliches Kabel, mit wenigstens einer leitenden Seele (1), wenigstens einer Schicht (2) aus einem isolierenden Material, die diese leitende Seele umgibt, und wenigstens einem leitenden Mantel (3), welcher diese isolierende Schicht umgibt, dadurch gekennzeichnet, daß der Durchmesser $\phi_D$ des Mantels (3), der Durchmesser $\phi_B$ der leitenden Sele (1) und der Durchmesser $\phi_C$ der isolierenden Schicht (2) verknüpft sind durch die Beziehung :

$$\frac{\phi_B^2}{\phi_B^2 - \phi_C^2} = \frac{F_2}{F_1} \cdot \frac{1}{360} \cdot 2 \arcsin \frac{2\,\phi_B}{\phi_B + \phi_C},$$

worin $F_1$ den Anteil der $\beta^-$-Strahlung bedeutet, der von der Seele unter der Wirkung der Kernstrahlung abgegeben wird, die den Mantel erreicht, $F_2 \cdot (1/360) \cdot 2 \operatorname{arc} \sin (2\phi_B/\phi_D + \phi_C)$ den Anteil $\beta^-$-Strahlung bedeutet, die von dem Mantel unter der Wirkung der Kernstrahlung, die die Seele erreicht, abgegeben wird, daß das isolierende Material aus einer Mischung von zwei Metalloxyden gebildet ist, welche aus der folgenden Reihe ausgewählt sind : MgO, $Al_2O_3$, BeO, SrO, NbO, $ZrO_2$, und daß der Mantel (3) und die Seele (1) aus rostfreiem Stahl mit geringem Mangananteil bestehen.

2. Kabel nach Anspruch 1, dadurch gekennzeichnet, daß eine Umhüllungsschicht (4) aus Zirconium zwischen der Seele (1) und der isolierenden Schicht (2) angeordnet ist.

FIG. 1

FIG. 2

FIG. 3